# EUROPEAN PATENT APPLICATION

(11) **EP 4 696 868 A1**
(43) Date of publication of application: **18.02.2026**
(21) Application number: 25193523.5
(22) Date of filing: 01.08.2025
(51) Int. Cl.: F01D 11/08, C04B 35/80, F01D 11/10, F01D 25/12, F01D 25/24

(54) **CERAMIC MATRIX COMPOSITE COMPONENT, BLADE OUTER AIR SEAL ASSEMBLY, METHOD OF FORMING A CERAMIC MATRIX COMPOSITE COMPONENT AND GAS TURBINE ENGINE**

(30) Priority: 15.08.2024 US 202418806148
(71) Applicant: RTX Corporation, Farmington, CT 06032 (US)
(72) Inventor: GAO, Cheng, South Glastonbury, 06073 (US); LILES, Howard J., Newington, 06111 (US)
(74) Representative: Dehns

(57) **Abstract**

A method is described for introducing cooling cavities (180) into CMC components (100) beneath flanges (115, 116) such as T-shaped flanges (115, 116) within the CMC components (100). During layup, a base (110) of the CMC component (100) from a plurality of ceramic fiber plies (110a, 110b) in which a cooling cavity (180) is formed below the connection region between the flange (115, 116) and the base (110). Cooling fluid inlet passages (150, 160) are provided to permit cooling fluid to enter the cooling cavity (180) and thereby cool the internal region of the CMC component (100) to reduce formation of thermal stresses.

## Description

### FIELD OF THE INVENTION

The present disclosure relates generally to methods for manufacturing ceramic matrix composites (CMCs). In particular, the present disclosure concerns manufacturing CMC components with internal cooling cavities.

### BACKGROUND OF THE INVENTION

Gas turbine engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Certain components of gas turbine engines are thus exposed to the high-energy, high temperature gas flow (flow path components). Therefore, it is desirable that such components be made of heat resistant materials such as ceramic matrix composites (CMCs). CMC components can withstand much higher operating temperatures than components composed of superalloys. However, CMC components have comparably lower thermal conductivity. To increase their operational lifespans, precautions can be taken to cool CMC components by subjecting the components to a flow of cooling fluid (e.g., air).

In some cases, CMC components, such as blade outer air seals (BOAS), can exhibit flanges such as T-shaped flanges (e.g., radial flanges) that extend from a base structure as load bearing features. The region beneath such flanges has an increased material thickness in comparison to other portions of the component. These greater thicknesses render cooling more difficult and result in the formation of higher thermal gradients which in turn result in higher through-thickness and in-plane thermal stresses. The in-plane direction refers to the direction parallel to fiber orientation of the CMC fabric material that forms the CMC component of the CMC component. On the other hand, the through-thickness direction refers to the direction normal to the CMC fabric material. Thus, for example, in the case of a BOAS, the through-thickness direction is normal to the base structure of the BOAS and the through-thickness thermal gradient is from the surface of the base structure that is exposed to the hot gaspath to the back-side of the base structure.

There is thus a continuing need for alternative and/or improved manufacturing methods for providing cooling structures to allow for cooling of CMC components exposed to high temperature gas flow, particularly CMC components exhibiting flanges such as BOAS.

### SUMMARY OF THE INVENTION

In general, the present disclosure relates to methods for introducing cooling cavities into CMC components beneath flanges such as T-shaped flanges within the CMC components, and CMC components exhibiting such cooling cavities. In particular, the present disclosure relates to introducing a cooling cavity into a CMC component beneath flanges such as T-shaped flanges thereof during layup of a CMC preform or after densification of the CMC preform.

The present disclosure is directed, in a first aspect, to ceramic matrix composite (CMC) component having:
a base having a bottom inner surface and a top outer surface, the base comprising a plurality of ceramic fiber plies (or piles) comprising a first group of base plies and a second group of base plies,
at least one flange structure extending from the top outer surface of the base at a connection region, the flange structure having a radial flange section extending upward from the top outer surface of the base,
a cooling cavity beneath the at least one flange structure wherein the cooling cavity is below the connection region, the cooling cavity being positioned between the first group of base plies and the second group of base plies whereby a ply of the first group of base plies forms the bottom wall of the cooling cavity and a ply of the second group of base plies forms the top wall of the cooling cavity, and
at least one cooling fluid inlet passage extending through the at least one flange structure to the cooling channel.

**In** yet another aspect, the present disclosure is directed to a method of forming a ceramic matrix composite comprising:
laying up a plurality of ceramic fiber plies to form a base having a bottom inner surface and a top outer surface, the base having a first group of base plies and a second group of base plies, wherein, during the laying up of ceramic fiber plies to form the base at least one cooling cavity is formed within the base,
providing a plurality of ceramic fiber plies that form at least one flange structure extending from the top outer surface of the base at a connection region, the connection region being above the at least one cooling cavity, the flange structure having a radial flange section extending upward from the top outer surface of the base, wherein the base and at least one flange structure form a ceramic matrix composite preform,
subjecting the ceramic matrix composite preform to densification to form a ceramic matrix composite, and
before or after densification, providing at least one cooling fluid inlet passage extending through the at least one flange structure to the cooling channel,
wherein the at least one cooling cavity is formed by:
   inserting tooling or a fugitive material, during the laying up, between the first group of base plies and the second group of base plies to form the cooling cavity such that a ply of the first group of base plies forms a bottom wall of the cooling cavity and a ply of the second group of base plies forms a top wall of the cooling cavity, or
   the first group of base plies, the second group of base plies, or both include an intermediate group of base plies which a section removed there form to form the cooling cavity such that a ply of the first group of base plies forms a bottom wall of the cooling cavity, a ply of the second group of base plies forms a top wall of the cooling cavity, and intermediate group of base plies form aide walls of the cooling cavity.

**In** yet another aspect, the present disclosure is directed to a gas turbine engine comprising:
a fan section a compressor section, a combustion chamber, and a turbine section, the turbine section including at least one rotor and one or more turbine blade(s) extending radially outwardly from the at least one rotor;
a blade outer air seal assembly positioned between the one or more turbine blade(s) and an outer casing to the engine;
the blade outer air seal is formed of a plurality blade outer air seal segments, wherein each blade outer air seal segment comprises
   a base having a bottom inner surface and a top outer surface, the base comprising a plurality of ceramic fiber plies (or piles) comprising a first group of base plies and a second group of base plies,
   at least one flange structure extending from the top outer surface of the base at a connection region, the flange structure having a radial flange section extending upward from the top outer surface of the base,
   a cooling cavity beneath the at least one flange structure wherein the cooling cavity is below the connection region, the cooling cavity being positioned between the first group of base plies and the second group of base plies whereby a ply of the first group of base plies forms the bottom wall of the cooling cavity and a ply of the second group of base plies forms the top wall of the cooling cavity, and
   at least one cooling fluid inlet passage extending through the at least one flange structure to the cooling channel.

**In** further examples of the present disclosure, including further examples of the above, the at least one cooling fluid inlet passage extends through the length of the radial flange section from a top edge surface of the radial flange section to the cooling channel.

**In** further examples of the present disclosure, including further examples of the above, the flange structure is formed from a Y-weave of a plurality of ceramic fiber plies (or piles) wherein the Y-weave forms the radial flange section extending upward from the top outer surface of the base and, at the connection region, has two arms formed by bifurcation of the plurality of ceramic fiber plies (or piles) of the Y-weave, each of the two arms form a fillet at the connection region and the at least one cooling fluid inlet passage passes through at least one of the fillets.

**In** further examples of the present disclosure, including further examples of the above, the at least one flange structure extends perpendicular to the base.

**In** further examples of the present disclosure, including further examples of the above, the at least one flange structure extends from the base at an angle of 15° to 75°.

**In** further examples of the present disclosure, including further examples of the above, the at least one flange structure further comprises at least one cooling fluid outlet passage that extends from the cooling channel to the bottom inner surface of the base.

**In** further examples of the present disclosure, including further examples of the above, the base has a front edge, a back edge, and two side edges, and the cooling channel further comprises a cooling fluid outlet passage at at least one of the side edges of the base.

In further examples of the present disclosure, including further examples of the above, the component is a blade outer air seal (BOAS) segment.

In further examples of the present disclosure, including further examples of the above, a plurality of BOAS segments are arranged to form an annular shaped structure.

In further examples of the present disclosure, including further examples of the above, the at least one cooling cavity is formed by inserting tooling or a fugitive material, during the laying up, between the first group of base plies and the second group of base plies to form the cooling cavity such that a ply of the first group of base plies forms the bottom wall of the cooling cavity and a ply of the second group of base plies forms the top wall of the cooling cavity.

In further examples of the present disclosure, including further examples of the above, the at least one cooling fluid inlet passage is formed during layup by insertion of tooling or fugitive material into the preform, or by drilling the at least one cooling fluid inlet passage into the at least one flange structure after densification.

In further examples of the present disclosure, including further examples of the above, the at least one cooling fluid outlet passage is formed during layup by insertion of tooling or fugitive material into the preform, or by drilling the at least one cooling fluid inlet passage into the at least one flange structure after densification.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
Fig. 1 schematically illustrates a partial cross section of an exemplary gas turbine engine.
Fig. 2 is a schematic illustration of a cross section of blade outer air seal (BOAS) having T-shaped flanges without cooling cavities beneath the flange(s).
Fig. 3 is a schematic illustration of a cross section of a blade outer air seal (BOAS) having T-shaped flanges with a cooling cavity beneath the flanges.
Fig. 4 is schematic illustration of a side view of a blade outer air seal (BOAS) segment having T-shaped flanges with a cooling cavity beneath each flange.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

While the discussion below often makes reference to BOAS and BOAS segments, it should be recognized that the present disclosure is not limited to BOAS but includes any CMC component exhibiting a flange such as T-shaped flange.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces into the flow of the hot gases, i.e., faces upstream. The trailing edge/portion of a structure is the edge/portion that the faces away from the flow of the hot gases, i.e., faces downstream.

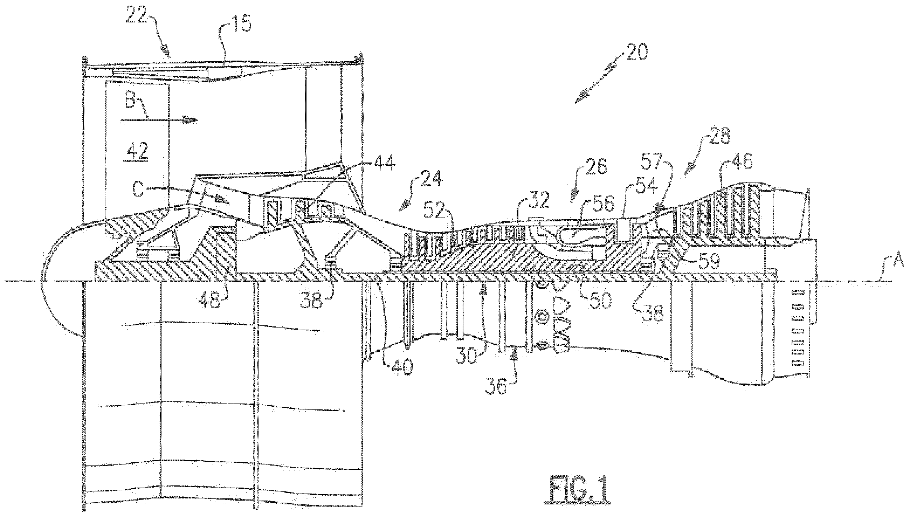

Fig. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine central longitudinal axis A which is positioned between an outer casing of the engine and the turbine blade(s) of the turbine section.

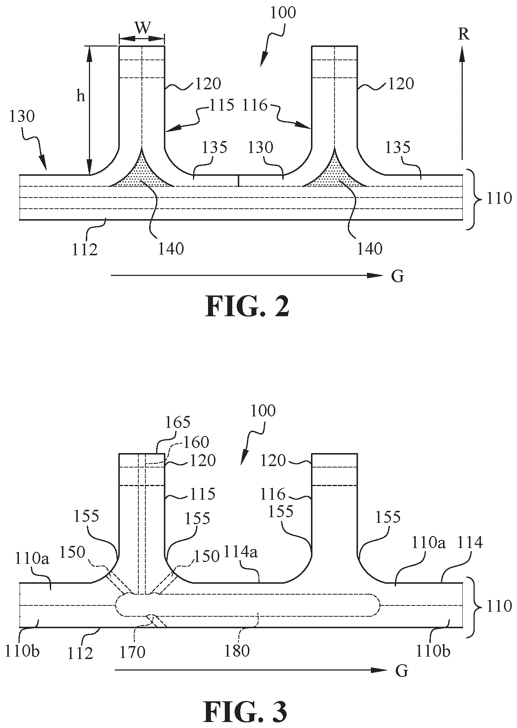

Fig. 2 illustrates a cross section of a BOAS segment 100. For context, line G represents the gaspath, i.e., the general flow path of hot gases through the turbine section. This general flow path coincides with the longitudinal axis of the engine. In this embodiment, the BOAS segment 100 includes a base 110 having a bottom inner surface 112 that faces the interior of the turbine section and is exposed to the flow of hot gases, and a top outer surface 114 that faces the outer casing of the engine. Base 110 is formed from a plurality of stacked ceramic fiber plies.

As shown in Fig. 2, the BOAS segment 100 further includes two T-flanges 115 and 116 that extend radially, with respect to the longitudinal axis of the engine, from the outer surface 114 of the segment 100. These flanges 115 and 116 are load bearing features and provide structures for attaching the segment 100 to the outer casing of the engine. In this embodiment flange 115 is the forward flange (i.e., closest to the front of the engine) and flange 116 is the aft flange (i.e., closest to the rear of the engine). Each of flanges 115 and 116 have a height "h", which extends in a radial direction R, and a width "W" which extends in an axial direction.

Each flange 115 and 116 can be formed as a Y-weave of a plurality of ceramic fiber plies. The plurality of ceramic fiber plies form a radial flange section 120 extending upward from the base 110. Within this radial flange section 120 the plies can be interwoven to reinforce and strengthen the flange. At the connection region between each radial flange section 120 and the base 110, the plies are bifurcated to form two arms 130 and 135, each of which can be made of a plurality of plies, that are incorporated into the base 110 of the BOAS segment. The bifurcation of the two arms 130 and 135 of ceramic fiber plies results in the formation of cavity 140 having a triangular shaped cross section below the radial flange section 120. In Fig. 2, to provide additional strength for the flange, cavity 140 is filled with ceramic material such as ceramic fibers ("noodles") or other ceramic filler material and is conventionally referred to as the noodle region.

As can be seen in Fig. 2, the region beneath the flanges 115 and 116 has a greater material thickness in comparison to other portions of the component. As noted above, these larger thicknesses render cooling more difficult and result in the formation of higher thermal gradients causing higher through-thickness and in-plane thermal stresses.

Fig. 3 illustrates a BOAS segment in accordance with an embodiment of the present disclosure. In this embodiment, a cooling cavity or cooling channel 180 is provided within the base 110 below the noodle region to facilitate cooling of the interior of the CMC component, i.e., in this case a BOAS segment. While this embodiment shows a single cooling cavity, it should be recognized that multiple cooling cavities can be used. In embodiment of Fig. 3, cooling cavity 180 extends beneath each of the flanges 115 and 116 and also extends within the base through a region beneath the portion 114a of the top outer surface 114 that is between the two flanges 115 and 116. The walls of the cavity are defined by two groups of plies of the base 110, a first group of base plies 110a that form the portion of the base 110 that includes the bottom inner surface and a second group of base plies 110b that form the portion of the base 110 that includes the top outer surface 114. As discussed further below, the cooling cavity can be formed during layup of the CMC preform. Alternatively, the cooling cavity can be, for example, machined from a pre-densified partial layup (partial preform) of the CMC preform. After machining, additional CMC plies are then wrapped around the machined pre-densified partial preform to form the completed CMC preform which is then subjected to final densification process.

To permit ingress of cooling fluid, one or more cooling fluid inlet passages(s) are provided to allow external cooling fluid (e.g., cooling air) to enter into the cooling cavity positioned in the interior of the BOAS segment beneath the radial flange section(s) 120. For example, one of more cooling fluid inlet passages 150 can be formed through one or both fillet regions 155 of a T-flange, to allow the cooling fluid to access the cooling cavity 180. Such cooling fluid inlet passages 150 can be made, for example, by drilling or other machining after densification. These cooling fluid inlet passages 150 extend from the outer surface of the segment 100, through a fillet region 155 of the flange, to the cooling cavity 180 within the interior of the base 110 of the BOAS segment. Alternatively or additionally, one of more cooling fluid inlet passages 160 can be formed through the radial flange section 120, for example, during the layup process as discussed below, to allow the cooling fluid to access the cooling cavity 180. These cooling fluid inlet passages 160 extend from a top edge 165 (i.e., the distal end of the flange with respect to the longitudinal axis of the engine) of the radial flange section 120, down through the radial flange section 120, to the cooling cavity 180 within the interior of the base 110 of BOAS segment 100.

To provide for egress of the cooling fluid, one or more cooling fluid outlet passage can be provided. For example, one or more cooling fluid outlet passages 170 can be formed at the inner surface of the segment 100, for example by drilling or other machining, to allow the cooling fluid to escape from the cooling cavity 180 into the interior of the turbine section. By positioning the cooling fluid outlet passage at the inner surface, the escaping cooling fluid can form a gaspath film to aid in cooling the inner surface of the BOAS assembly.

The shape of the cooling fluid inlet passages and cooling fluid outlet passages can vary. By way of example, the cooling fluid inlet and/or outlet passages can be in the form of cylindrical passages or slot-shaped passages. The cavities do not need to be simply linear, for example, having the shape of an elongated rectangular. The shape of the cavities can be more complex, such as a serpentine shaped cavity, with cooling fluid flow direction controlled by the shape of the cavity. Such complex shapes can be formed by removing sections of plies during layup, machining, or the use of fugitive material as described herein.

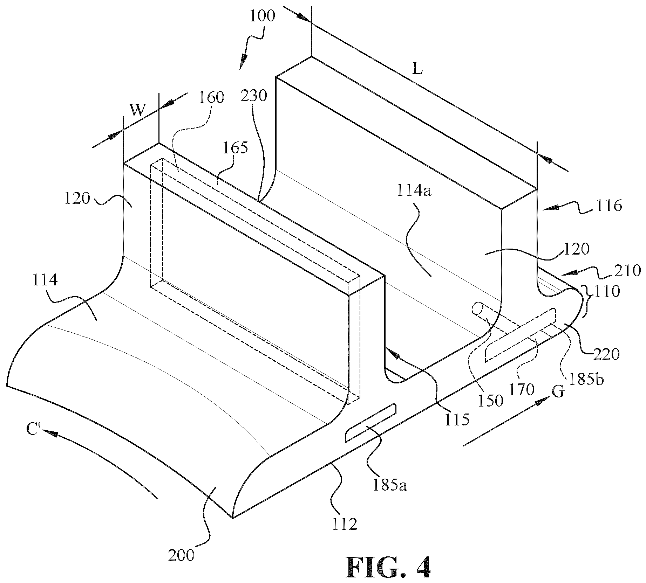

Fig. 4 shows a side view of a BOAS segment 100 in accordance with the present disclosure in which the segment 100 has two cooling cavities 185a and 185b, each of which is positioned beneath one of flanges 115 and 116 below the respective noodle regions. As shown in Fig. 4, the flanges 115 and 116 have a length L in a direction perpendicular to the radial direction. In this embodiment, the direction of length L coincides with a circumferential direction shown by the arrow C'.

As shown in Fig. 4, the base 110 can have an arcuate shape such that the bottom inner surface 112 and a top outer surface 114 are curved, i.e., inner surface 112 being concave and outer surface 114 being convex. The arcuate shape of the bases of the BOAS segments will permit the overall BOAS assembly to form an annular shroud between the outer casing of the engine and the blades of the turbine section.

Segment 100 has 4 edges, a front or leading edge 200, a back or trailing edge 210, and two side edges 220 and 230 which run in an axial direction. In a BOAS assembly, the side edges 220 and 230, also called matefaces, will be proximate to side edges or matefaces of adjacent BOAS segments that make up the BOAS assembly.

Cooling cavity 185a, beneath flange 115, is shown as being open at side edge 220. While not shown, alternatively or additionally, cooling cavity 185a can also be open at side edge 230. Also, in this embodiment, radial flange section 120 of flange 115 is provided with a cooling fluid inlet passage 160 that is in the shape a slot. Thus, cooling fluid can enter fluid inlet passage 160, pass down through the radial flange section 120 and then enter cooling cavity 185a to cool the interior of the segment 100 beneath flange 115. The cooling fluid can then escape the cooling cavity 185a at the opening at side edge 220. Allowing the cooling fluid to escape from the cooling cavity at the matefaces will provide a mateface purge stream which will facilitate cooling of the BOAS assembly.

On the other hand, cooling cavity 185b under flange 116 is depicted as being closed at side edge 220 as indicated by the dash line. The closing of the ends of a cooling cavity can be achieved by using wrapping plies during the preform preparation. Here, the cooling fluid can enter through one or more cooling fluid inlet passages 150 and enter cooling cavity 185b before escaping through one or more cooling fluid outlet passages 170. For example, cooling fluid can enter through a fluid inlet passages 150 that passes through a fillet of flange 116 at a point proximate to side edge 220, then traverse the cooling cavity 185b in a direction towards side face 230, before exiting the cooling cavity 185b through a cooling fluid passage 170 proximate the side edge 230.

As shown in Figs. 3-4, the cooling cavities extend the entire width of the flanges. Thus, cavity 185 beneath flanges 115 and 116 in Fig. 3 extends beneath the entire width w of each of flanges 115 and 116. In Fig 4, cavity 185a extends beneath the entire width w of flange 115 and cavity 185b extends beneath the entire width w of flange 116. It is also possible for the cavity to extend less than the entire width of the flange. For example, the cavity can extend about 60% - 100% or about 65% - 90% or about 75% - 95% or about 85% - 95% of the width of the flange.

The length of the cooling cavity can extend the entire length of the flange (e.g., a cavity being open at both side edges of the segment). Alternatively, the cooling cavity can extend less than the entire length of the cavity. For example, the cavity can extend about 60% - 100% or about 65% - 90% or about 75% - 95% or about 85% - 95% of the length of the flange.

The height of the cavities (i.e., in the radial direction) can vary and will also be dependent on the thickness of the base beneath the flange(s) in the CMC component and the desired cooling capacity. Lower cavity heights can increase flow of the cooling fluid and thereby increase cooling effectiveness. For example, the cooling cavity can have a height of greater than 0.01 inches (0.254 mm) such as >0.01 to 1 inch (>0.254 to 25.4 mm) or about 0.05 to 0.5 inches (1.27 to 12.7 mm) or about 0.1 to 0.5 inches (2.54 mm to 12.7 mm).

The cooling cavities 185a and 185b can each be a single cavity or can be a plurality of sub-cavities positioned along the length of the flange. For example, three sub-cavities can used along the length of the flange. The first sub-cavity is proximate to the side edge 220 and is provided with a cooling fluid inlet passage 150 or 160 to allow ingress of cooling fluid and the cooling cavity can be open at side edge 220 to allow egress of the cooling fluid. A second sub-cavity is positioned adjacent the first sub-cavity under a middle section of the length of the flange. The second sub-cavity is provided with one or more cooling fluid inlet passages 150 or 160 to allow ingress of cooling fluid and one or more cooling fluid outlet passages 170 to allow egress of the cooling fluid. The third sub-cavity is proximate to the side edge 230 and, like the first sub-cavity, is provided with a one or more cooling fluid inlet passages 150 or 160 to allow ingress of cooling fluid and the cooling cavity can be open at side edge 230 to allow egress of the cooling fluid. By providing a plurality of sub-cavities, each sub-cavity can have its own dedicated flow with different flow parameters, allowing for more refined control of cooling.

In the embodiments shown in Figs. 3 and 4, the radial flange section 120 is depicted as being perpendicular to the outer surface 114 of base of the CMC component. However, it should be recognized that the radial flange section can form an angle with the base that is less than 90°. For example, the radial flange section can form an angle with the base of about 15° to 75° or about 30° to 60° or about 45° to 75°.

The CMC component with flange, e.g., BOAS segment, is prepared by laying up (e.g., stacking) ceramic fiber plies to form a ceramic preform. The preform serves as the initial framework for creating the CMC component. The fiber plies are made from ceramic fibers or fiber tows. The fibers (or filaments) or fiber tows may be twisted or untwisted, and may be arranged in woven, non-woven, braided, knitted or other known fiber architectures. The fiber tows can be woven into plies, and the plies are then laid up and shaped into a preform of the CMC component. Binders such as polyvinyl alcohol (PVA) and polyvinyl butyral (PVB) can be used during this layup process to help hold the plies together.

The fibers/filaments used in the CMC preforms may be, for example, silicon carbide (SiC), carbon, mullite (3Al₂O₃·2SiO or 2Al₂O₃SiO₂ or combinations thereof), silicon nitride or aluminum oxide. The ceramic fibers may also be oxycarbide-, oxynitride-, carbonitride-, silicate-, boride-, phosphide-, or oxide-based fibers. **In** still further examples, the fibers are fully crystalline, partially crystalline, or predominantly amorphous or glassy. **In** one particular example, the fibers are silicon carbide (SiC) fibers.

After the CMC preform is formed by the layup, the preform can be subjected to densification to add matrix material to fill the remaining void space within the preform. This procedure stiffens and strengthens the woven plies of ceramic fiber tows to form the CMC. Thus, densification involves reducing the porosity within the preform, making it more solid and robust, by filing the remaining pores with the matrix material. The goal is to achieve a higher relative density, and ensure that the final CMC structure is compact and free of large voids.

One approach for layup and densification is to form the complete preform of the CMC component and then subject the entire final preform to densification. Layup and densification can also be performed as a series of repeated steps.

For example, an initial base of the component can be prepared by laying up plies of woven ceramic fiber tows which are then subjected to densification. Once formed, the initial base can the wrapped in further plies of woven ceramic fiber tows, including, for example, Y-shaped plies that will form the flanges and possibly please covering the side edges to close off either or both ends the cooling cavities. The resultant structure can them be subjected to a further densification to add matrix material to the added plies.

Also, the formation of the cooling cavities can also be incorporated as part of a series of repeated steps layup and densification steps. For example, a partial preform can be prepared by layup and then densified. The densified partial preform can then be machined to form the cooling cavities. Thereafter, the machined, densified, partial preform can be wrapped with further plies to form the final preform and then subject to a further final densification step to form the CMC composite.

Various methods can be used to add the matrix material during densification. These include, but are not limited to, chemical vapor infiltration (CVI), liquid silicon infiltration (LSI), and polymer infiltration and pyrolysis (PIP).

Chemical vapor infiltration (CVI) involves introducing gaseous precursors into the porous CMC preform. These precursors react at the surface of the fibers, depositing additional material and filling the voids. Chemical liquid-vapor deposition (CLVD) uses liquid precursors that vaporize and infiltrate the preform. The liquid-to-vapor conversion occurs at the fiber surface, leading to densification.

Liquid silicon infiltration (LSI) utilizes liquid silicon to infiltrate the CMC preform. Silicon reacts with carbon or other constituents of the CMC preform, forming a dense matrix.

In polymer infiltration and pyrolysis (PIP) a polymer precursor is infiltrated into the preform. The subsequent pyrolysis process converts the polymer into a ceramic matrix. During pyrolysis the matrix shrinks leading to microcracks, which require repeating the polymer and infiltration cycle multiple times.

Prior to densification, steps can be taken to retain the shape of structural features and/or to form structural features that will be retained following densification. For example, prior to densification, appropriately shaped tooling can be inserted into a preform base during layup to form the cooling cavity and prevent matrix material from blocking the cooling cavity during densification. For example, tooling can be inserted between a first group of base plies and a second group of base plies whereby a ply of the first group of base plies will form the bottom wall of the cooling cavity and a ply of the second group will form the top wall of the cooling cavity. After densification, the tooling can be removed and the densified preform can be subjected to wrapping with further plies and a further densification.

Alternatively, an appropriately shaped structure of a fugitive material (such as graphite) can be inserted into a preform base during layup to form the cooling cavity and prevent matrix material from blocking the cooling cavity during densification. For example, the fugitive material can be inserted between a first group of base plies and a second group of base plies whereby a ply of the first group of base plies will form the bottom wall of the cooling cavity and a ply of the second group will form the top wall of the cooling cavity. The fugitive material can then be subsequently removed following densification.

The cooling cavities can be also shaped by removing sections from several the plies prior to layup. For example, first a stack of plies can be arranged to form an initial base (e.g., a first group of base plies). Then a plurality of plies (e.g., an intermediate group of base plies) can be added to the stack which have matching sections removed therefrom corresponding to the desired shape of the cooling cavity. For example, the removed sections can be in the shape of elongated rectangular wherein the removed sections create a rectangular void that will become the cooling cavity. These plies are then covered with further plies to cover the top of the cooling cavity (e.g., a second group of base plies). The plies with the sections removed therefrom can be considered part of the first group of base plies, the second group of base plies, or both.

**In** the resultant cooling cavity, the bottom wall of the cavity is formed by a ply of the first group of base plies. The top wall of the cavity is formed by a ply of the second group of base plies. Finally, the side walls of the cavity are formed by the intermediate group of base plies.

Also, the cooling fluid inlet passages and cooling fluid outlet passages can be formed during the layup process by positioning, e.g., insertion, of tooling or fugitive material. For example, during layup a cooling fluid inlet passage can be formed in the radial flange section by insertion of a planar tooling or planar shaped fugitive material to form a cooling inlet in the form of a radial slot within the radial flange section. Similarly, cooling fluid inlet passages through the fillets or cooling fluid outlet passages at the bottom inner surface can be formed by insertion of appropriately shaped tooling or fugitive material. The tooling or fugitive material can then be removed after densification.

Fugitive material used to form the cooling cavity and/or the cooling fluid inlet and outlet passages can be removed by the heating the composite to the melting temperature/vaporization temperature of the fugitive material or by use of an appropriate solvent to dissolve the fugitive material. For example, when using graphite as a fugitive material the graphite can be vaporized by exposure to oxygen at elevated temperature, for example, above 800°F (427 °C).

Alternatively, the cooling fluid inlet and outlet passages can be made following densification. For example, cooling fluid inlet passages can be drilled through the fillet regions to form a passage for the ingress of cooling fluid into the cooling cavity and/or cooling fluid outlet passages can be drilled through the bottom surface of the base to form a passage for the egress of cooling fluid out of the cooling cavity.

The present disclosure provides an efficient method for forming cooling cavities beneath radial flanges. These cooling cavities provide a means for effectively cooling the interior of CMC components exhibiting flanges and thereby reduce the formation of thermal gradients at regions of high thickness and in turn reduce through-thickness and in-plane thermal stresses.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A ceramic matrix composite (CMC) component (100) comprising:
a base (110) having a bottom inner surface (112) and a top outer surface (114), said base (110) comprising a plurality of ceramic fiber plies comprising a first group of base plies (110b) and a second group of base plies (110a),
at least one flange structure (115, 116) extending from the top outer surface (114) of the base (110) at a connection region, said flange structure (115, 116) having a radial flange section (120) extending upward from the top outer surface (114) of the base (110),
a cooling cavity (180; 185a, 185b) beneath said at least one flange structure (115, 116) wherein the cooling cavity (180; 185a, 185b) is below the connection region, said cooling cavity (180; 185a, 185b) being positioned between the first group of base plies (110b) and the second group of base plies (110a) whereby a ply of the first group of base plies (110b) forms the bottom wall of the cooling cavity (180; 185a, 185b) and a ply of the second group of base plies (110a) forms the top wall of the cooling cavity (180; 185a, 185b), and
at least one cooling fluid inlet passage (150; 160) extending through said at least one flange structure (115, 116) to the cooling cavity (180; 185a, 185b).

2. The CMC component according to claim 1, wherein said component (100) is a blade outer air seal (BOAS) segment (100).

3. A BOAS assembly comprising a plurality of BOAS segments (100) according claim 2, wherein said BOAS segments (100) are arranged to form an annular shaped structure.

4. A method of forming a ceramic matrix composite comprising:
laying up a plurality of ceramic fiber plies to form a base (110) having a bottom inner surface (112) and a top outer surface (114), said base (110) having a first group of base plies (110b) and a second group of base plies (110a), wherein, during the laying up of ceramic fiber plies to form the base (110) at least one cooling cavity (180; 185a, 185b) is formed within the base (110),
providing a plurality of ceramic fiber plies that form at least one flange structure (115, 116) extending from the top outer surface (114) of the base (110) at a connection region, said connection region being above the at least one cooling cavity (180; 185a, 185b), said flange structure (115, 116) having a radial flange section (120) extending upward from the top outer surface (114) of the base (110), wherein the base (110) and at least one flange structure (115, 116) form a ceramic matrix composite preform,
subjecting the ceramic matrix composite preform to densification to form a ceramic matrix composite, and
before or after densification, providing at least one cooling fluid inlet passage (150; 160) extending through said at least one flange structure (115, 116) to the cooling cavity (180; 185a, 185b),
wherein said at least one cooling cavity (180; 185a, 185b) is formed by:
(a) inserting tooling or a fugitive material, during the laying up, between the first group of base plies (110b) and the second group of base plies (110a) to form the cooling cavity (180; 185a, 185b) such that a ply of the first group of base plies (110b) forms a bottom wall of the cooling cavity (180; 185a, 185b) and a ply of the second group of base plies (110a) forms a top wall of the cooling cavity (180; 185a, 185b), or
(b) the first group of base plies (110b), the second group of base plies (110a), or both include an intermediate group of base plies with a section removed therefrom to form the cooling cavity (180; 185a, 185) such that a ply of the first group of base plies (110b) forms a bottom wall of the cooling cavity (180; 185a, 185b), a ply of the second group of base plies (110a) forms a top wall of the cooling cavity (180; 185a, 185b), and intermediate group of base plies form side walls of the cooling cavity (180; 185a, 185b).

5. The method according to claim 4, the CMC component (100) according to claim 1 or 2, or the BOAS assembly according to claim 3, wherein said at least one cooling fluid inlet passage (160) extends through the length of said radial flange section (120) from a top edge surface (165) of said radial flange section (120) to said cooling cavity (180; 185a, 185b).

6. The method, CMC component or BOAS assembly according to any preceding claim, wherein said flange structure (115, 116) is formed from a Y-weave of a plurality of ceramic fiber plies wherein the Y-weave forms the radial flange section (120) extending upward from the top outer surface (114) of the base (110) and, at the connection region, has two arms (130, 135) formed by bifurcation of the plurality of ceramic fiber plies of the Y-weave, each of said two arms (130, 135) form a fillet (155) at the connection region and said at least one cooling fluid inlet passage (150; 160) passes through at least one of the fillets (155).

7. The method, CMC component or BOAS assembly according to any preceding claim, wherein said at least one flange structure (115, 116) extends perpendicular to said base (110).

8. The method, CMC component or BOAS assembly according to any of claims 1 to 6, wherein said at least one flange structure (115, 116) extends from said base (110) at an angle of 15° to 75°.

9. The method, CMC component or BOAS assembly according to any preceding claim, wherein said at least one flange structure (115, 116) further comprises at least one cooling fluid outlet passage (170) that extends from said cooling cavity (180; 1851, 185b) to said bottom inner surface (112) of said base (110).

10. The method, CMC component or BOAS assembly according to any preceding claim, wherein said base (110) has a front edge (200), a back edge (210), and two side edges (220, 230), and said cooling cavity (180; 185a, 185b) further comprises a cooling fluid outlet passage (170) at at least one of said side edges (220, 230) of the base (110).

11. The method according any of claims 4 to 10, wherein said at least one cooling cavity (180; 185a, 185b) is formed by inserting tooling or a fugitive material, during the laying up, between the first group of base plies (110b) and the second group of base plies (110a) to form the cooling cavity (180; 185a, 185b) such that a ply of the first group of base plies (110b) forms the bottom wall of the cooling cavity (180; 185a, 185b) and a ply of the second group of base plies (110a) forms the top wall of the cooling cavity (180; 185a, 185b).

12. The method according to any of claims 4 to 11, wherein said at least one cooling fluid inlet passage (150; 160) is formed during layup by insertion of tooling or fugitive material into the preform, or by drilling said at least one cooling fluid inlet passage (150; 160) into the at least one flange structure (115, 116) after densification.

13. The method according to claim 9, or any of claims 10 to 12 as dependent on claim 9, directly or indirectly, wherein said at least one cooling fluid outlet passage (170) is formed during layup by insertion of tooling or fugitive material into the preform, or by drilling said at least one cooling fluid outlet passage (170) into the base (110) after densification.

14. A gas turbine engine (20) comprising:
a fan section (22), a compressor section (24), a combustion chamber (56), and a turbine section (28), said turbine section (28) including at least one rotor and one or more turbine blade(s) extending radially outwardly from said at least one rotor;
a blade outer air seal assembly positioned between the one or more turbine blade(s) and an outer casing to the engine (20);
said blade outer air seal assembly is formed of a plurality blade outer air seal segments (100), wherein each blade outer air seal segment (100) is a CMC component (100) as recited in any of claims 1, 2 or 5 to 10.
